# EUROPÄISCHE PATENTSCHRIFT

(11) **EP 2 065 727 B1**
(45) Veröffentlichungstag und Bekanntmachung des Hinweises auf die Patenterteilung: **16.04.2014**
(21) Anmeldenummer: 08105384.5
(22) Anmeldetag: 19.09.2008
(51) Int. Cl.: G01S 13/87, G01S 7/41, G01S 13/00, G01S 13/72, G01S 13/93, G01S 13/46

(54) **Verfahren zur Schätzung der Breite von Radarobjekten**
Method for estimating the width of radar objects
Procédé d'évaluation de la largeur d'objets radar

(30) Priorität: 16.11.2007 DE 102007054821
(43) Veröffentlichungstag der Anmeldung: 03.06.2009
(73) Patentinhaber: Robert Bosch GmbH, 70442 Stuttgart (DE)
(72) Erfinder: Jordan, Ruediger, 70192 Stuttgart (DE)

(56) Entgegenhaltungen:
- EP-A- 0 935 143
- WO-A-03/050562
- DE-A1- 10 260 855
- DE-A1- 10 336 638
- DE-A1- 19 959 398
- JP-A- 2007 147 532
- US-A1- 2005 225 744

## Beschreibung

### Stand der Technik

Die Erfindung betrifft ein Verfahren zur Schätzung der Breite von Radarobjekten in einem Ortungssystem für Kraftfahrzeuge, das mindestens zwei winkelauflösende Radarsensoren aufweist, bei dem die durch unterschiedliche Radarsensoren georteten Reflexpunkte, die aufgrund der Ähnlichkeit ihrer Abstands- und und der annähernden Identität ihrer Relativgeschwindigkeitsdaten demselben Objekt zuzuordnen sind, zu einer Gruppe zusammengefaßt werden, Lateralpositionen der Reflexpunkte aus dieser Gruppe berechnet werden, für verschiedene Paare dieser Reflexpunkte die Differenz der Lateral positionen berechnet wird, und zur Bestimmung eines Schätzwertes für eine Mindestbreite des Objekts das Maximum dieser Differenzen gesucht wird.

In Kraftfahrzeugen werden radarbasierte Ortungssysteme häufig im Zusammenhang mit Fahrerassistenzsystemen eingesetzt, beispielsweise bei sogenannten ACC-Systemen (Adaptive Cruise Control), die eine automatische Abstandsregelung zu einem vorausfahrenden Fahrzeug erlauben, oder bei prädiktiven Sicherheitssystemen (PSS), die dazu dienen, eine bevorstehende Kollision zu erkennen und automatischen Maßnahmen einzuleiten, um die Kollision abzuwenden und/oder zumindest die Folgen der Kollision zu mildern.

Bei den eingesetzten Radarsensoren handelt es sich typischerweise um langreichweitige, sowohl abstands- wie auch winkelauflösende Radarsensoren (LRR; Long Range Radar), die mit einer Frequenz von etwa 76 GHz arbeiten, oder um abstandsauflösende kurzreichweitige Sensoren (SRR; Short Range Radar), die mit einer Frequenz im Bereich von etwa 24 GHz arbeiten, oder um Kombinationen dieser beiden Sensortypen. Es ist auch vorgeschlagen worden, zwei LRR-Sensoren einzusetzen, deren Ortungsrichtungen nach entgegengesetzten Seiten von der Längsachse des Fahrzeugs abweichen, so daß die linken und rechten Fahrbahnränder besser überwacht werden können und im Überlappungsbereich auf der Fahrbahn eine höhere Ortungsfrequenz erreicht wird.

Die winkelauflösenden LRR-Sensoren liefern Information über den Abstand und die Relativgeschwindigkeit der georteten Objekte sowie über deren Azimutwinkel, aus dem sich dann anhand des Abstands die ungefähre laterale Position des Objekts, also dessen Lage in der Richtung quer zur Längsachse des Fahrzeugs berechnen läßt.

Für verschiedene Assistenzfunktionen wäre es wünschenswert, darüber hinaus auch Information über die ungefähre Breite der georteten Objekte zur Verfügung zu haben, so daß beispielsweise bei einem PSS-System besser entschieden werden kann, ob eine Umfahrung des Objekts möglich ist oder nicht.

Bei den herkömmlichen Ortungssystemen ist eine solche Breitenschätzung jedoch nicht mit zufriedenstellender Genauigkeit möglich, auch dann nicht, wenn das Ortungssystem über einen winkelauflösenden LRR-Sensor verfügt. Ein wesentlicher Grund besteht darin, daß das von einem Objekt, beispielsweise der Rückfront eines vorausfahrenden Fahrzeugs, reflektierte Radarsignal nicht gleichmäßig von allen über die Breite des Objekts verteilten Punkten empfangen wird, sondern auf einen oder wenige Reflexpunkte lokalisiert ist, an denen das Einfallslot der reflektierenden Fläche mit der Sichtlinie zum Radarsensor zusammenfällt. Je nach räumlicher Beziehung zwischen dem Radarsensor und dem Objekt kann dabei der (Haupt-) Reflexpunkt unvorhersehbar zwischen verschiedenen Punkten auf der Rückfront des Objekts "springen", was auch die Genauigkeit und Verläßlichkeit bei der Bestimmung der lateralen Position des Objekts einschränkt.

DE 103 36 638 beschreibt ein Fahrerassistenzsystemen für Kraftfahrzeuge, bei dem die georteten Objekte nach ihrer geschätzten Breite klassifiziert werden. Es wird jedoch kein spezielles Verfahren zur Schätzung der Objektbreite angegeben.

Aus DE 101 60 299 A1 und DE 102 60 855 A1 sind radarbasierte Ortungssysteme mit mehreren 24 GHz-Sensoren bekannt, bei denen die Breite der Objekte anhand charakteristischer Muster in den von den verschiedenen Sensoren gemessenen Abstandsdaten geschätzt wird. Dabei wird unter anderem der Umstand ausgenutzt, daß im Fall einer breiten, ebenen Rückfront, etwa eines LKW, alle nebeneinander angeordneten Radarsensoren im wesentlichen den gleichen Abstand messen werden, während sich bei einem oder mehreren lokalisierten Objekten die Abstandsdaten der verschiedenen Sensoren in charakteristischer Weise verteilen.

Aus DE 199 59 398 A1 ist ein Verfahren nach dem Oberbegriff des Anspruchs 1 bekannt.

DE 102 60 855 A und EP 1 5222 873 A1 beschreiben Sensoranordnungen mit mehreren nicht-winkelauflösenden Radarsensoren, die in Querrichtuang des Fahrzeugs voneinander beabstandet sind.

DE 10 2005 013 146 A1 beschreibt eine Sensoranordnung mit mehreren winkelauflösenden, in Querrichtuang des Fahrzeugs voneinander beabstandeten Radarsensoren, bei dem Ortungssignale des einen Radarsensors zu Blindheitsprüfung des anderen Radarsensors benutzt werden.

### Offenbarung der Erfindung

Aufgabe der Erfindung ist es, ein Verfahren anzugeben, das eine verbesserte Breitenschätzung mit Hilfe von mindestens zwei winkelauflösenden Radarsensoren erlaubt.

Diese Aufgabe wird erfindungsgemäß dadurch gelöst, daß bei einem Verfahren der eingangs genannten Art die mindestens zwei winkelauflösenden Radarsensoren in Querrichtuang des Fahrzeugs nahe an den linken und rechten Ecken des Fahrzeugs angeordnet sind.

Die Erfindung beruht maßgeblich auf der Überlegung, daß der genaue Ort eines Reflexpunktes auf der Rückfront eines Objekts relativ empfindlich von der räumlichen Beziehung zwischen diesem Objekt und dem Radarsensor abhängig ist, mit dem dieser Reflexpunkt geortet wird. Wenn mindestens zwei Radarsensoren vorhanden sind, werden deshalb die verschiedenen Sensoren von dem Objekt unterschiedliche Reflexpunkte "sehen", und die Lage dieser Reflexpunkte relativ zum Objekt wird sich um so stärker unterscheiden, je weiter die Sensoren in Querrichtung des Fahrzeugs voneinander beabstandet sind.

Wenn aufgrund der Ähnlichkeit der Abstände und der annähernden Identität der Relativgeschwindigkeiten feststeht, daß die georteten Reflexpunkte zu demselben Objekt gehören, so ist die tatsächliche Breite des Objekts jedenfalls größer als der maximale Abstand zwischen zwei beliebigen Reflexpunkten. Der Vorteil des erfindungsgemäßen Verfahrens besteht deshalb darin, daß die Gruppe der Reflexpunkte, deren Lateralpositionen miteinander verglichen werden, auch solche Paare von Reflexpunkten umfaßt, die von verschiedenen Sensoren erfaßt wurden und bei denen deshalb die Chance besonders groß ist, daß sie am Objekt einen relativ großen lateralen Abstand zueinander aufweisen. Es besteht deshalb eine hohe Wahrscheinlichkeit, daß der auf diese Weise erhaltene Schätzwert für die Mindestbreite des Objekts in die Nähe der realen Objektbreite kommt. Für die auf der Grundlage der Ortungsdaten auszuführenden Assistenzfunktionen, beispielsweise für die Entscheidung, ob es zu einer Kollision mit dem Objekt kommen wird oder ob noch ein Ausweichen möglich ist, wird dieser Informationsgewinn oft einen entscheidenden Vorteil darstellen.

Vorteilhaft ist außerdem, daß sich das erfindungsgemäße Verfahren mit vorhandener Sensortechnologie (mit herkömmlichen LRR-Sensoren) ausführen läßt, ohne daß an der Hardware irgendwelche nennenswerten Modifikationen vorgenommen werden müssen.

Ein Fahrerassistenzsystem, in dem oben beschriebene Verfahren implementiert ist, ist Gegenstand des unabhängigen Erzeugnisanspruchs.

Vorteilhafte Weiterbildungen und Ausgestaltungen der Erfindung sind in den Unteransprüchen angegeben.

Naturgemäß ist es im Rahmen der Erfindung zweckmäßig, wenn die beiden winkelauflösenden Radarsensoren einen möglichst großen lateralen Abstand zueinander aufweisen, sich also beispielsweise möglichst nahe an den linken und rechten vorderen Ecken des Fahrzeugs befinden, was zugleich den Vorteil hat, daß Hindernisse auch dann noch von mindestens einem der Radarsensoren geortet werden können, wenn sie nur einen geringen Abstand zum eigenen Fahrzeug haben und von der linken oder rechten Seite her in den Fahrkorridor dieses Fahrzeugs eintreten.

Eine deutliche Verbesserung der Genauigkeit des erfindungsgemäßen Verfahrens läßt sich dadurch erreichen, daß, wie es an sich bei Radar-Ortungssystemen üblich ist, die Positionen der Objekte in einer sogenannten Tracking-Prozedur von Meßzyklus zu Meßzyklus verfolgt werden. Wenn sich die laterale Position des verfolgten Objekts im Laufe der Zeit relativ zum eigenen Fahrzeug verschiebt, ergibt sich auch eine entsprechende Verlagerung der Reflexpunkte auf diesem Objekt. Daher steigt die Wahrscheinlichkeit, daß man der realen Breite des Objekts näher kommt, wenn man zur Schätzung der Objektbreite die Differenzen der Lateralpositionen über mehrere Meßzyklen hinweg verfolgt. Für die Berechnung des Schätzwertes können verschiedene bekannte Algorithmen eingesetzt werden, z. B. Maximum- und Tiefpass-Filter, Median-Filter, Histogramm-Verfahren und dergleichen. So wird man beispielsweise bei dem Histogramm-Verfahren eine gewisse Häufigkeitsverteilung der Meßwerte für die Differenzen erhalten, und der beste Schätzwert für die Mindestbreite des Objekts wird dann bei einem Maximum der Häufigkeitsverteilung liegen und, sofern es mehrere Maxima gibt, bei demjenigen, das der größten Differenz entspricht.

Eine noch genauere Breitenschätzung wird ermöglicht, wenn man nach charakteristischen Mustern in den zeitlichen Änderungen der Lateralpositionen der Reflexpunkte sucht. Beispielsweise wird ein Reflexpunkt, der auf einer annähernd ebenen, quer zur Fahrtrichtung orientierten Fläche liegt, zeitlich relativ stabil sein, auch wenn sich die lateralen Positionen des Fahrzeugs und des Objekts relativ zueinander verschieben. Ein Reflexpunkt, der von einer stärker gewölbten Struktur des Objekts stammt, etwa von einer hinteren Ecke einer Fahrzeugkarosserie, wird dagegen stärkere zeitliche Fluktuationen zeigen und es so ermöglichen, die Lage der seitlichen Begrenzung des Objekts genauer zu bestimmen.

Generell besteht ein Vorteil der Erfindung darin, daß das Verfahren nicht nur eine Schätzung der Breite des Objekts erlaubt, sondern zugleich auch die lateralen Positionen der georteten Reflexpunkte in bezug auf das eigene Fahrzeug angibt. Diese Information ist für zahlreiche Assistenzfunktionen besonders wertvoll, da sie Rückschlüsse auf die lateralen Positionen des linken und rechten Begrenzungen des Objekts erlaubt.

Beispielsweise besteht bei einem ACC-System eine wesentliche Aufgabe darin, Einscherer, d. h. vorausfahrende Fahrzeuge, die von einer Nebenspur auf die eigene Spur wechseln, sowie Ausscherer, die von der eigenen Spur auf eine Nebenspur wechseln, möglichst frühzeitig zu erkennen. Wenn nun mit Hilfe der mindestens zwei Radarsensoren mehrere Reflexpunkte des vorausfahrendes Fahrzeugs verfolgt werden können, so läßt sich die wahre Lage und Ausdehnung dieses Fahrzeugs quer zur Fahrtrichtung wesentlich verläßlicher bestimmen, als wenn man nur einen Reflexpunkt zur Verfügung hätte, von dem man nicht weiß, ob er z. B. von der linken oder rechten Ecke des Fahrzeugs stammt. Die genauere Information über die laterale Lage und Ausdehnung des vorausfahrenden Fahrzeugs, erlaubt es, Ein- und Ausschervorgänge schon im Ansatz zu erkennen.

### Kurze Beschreibung der Zeichnungen

Ein Ausführungsbeispiel der Erfindung ist in den Zeichnungen dargestellt und in der nachfolgenden Beschreibung näher erläutert.

Es zeigen:
- Figuren 1 bis 6: Skizzen einer Frontpartie eines Kraftfahrzeugs und eines vorausfahrenden Fahrzeugs, zur Erläuterung des Grundprinzips der Erfindung bei unterschiedlichen räumlichen Konstellationen der Fahrzeuge;
- Fig. 7: ein Zeitdiagramm für ein Verfahren zur Schätzung der lateralen Ausdehnung eines Objekts; und

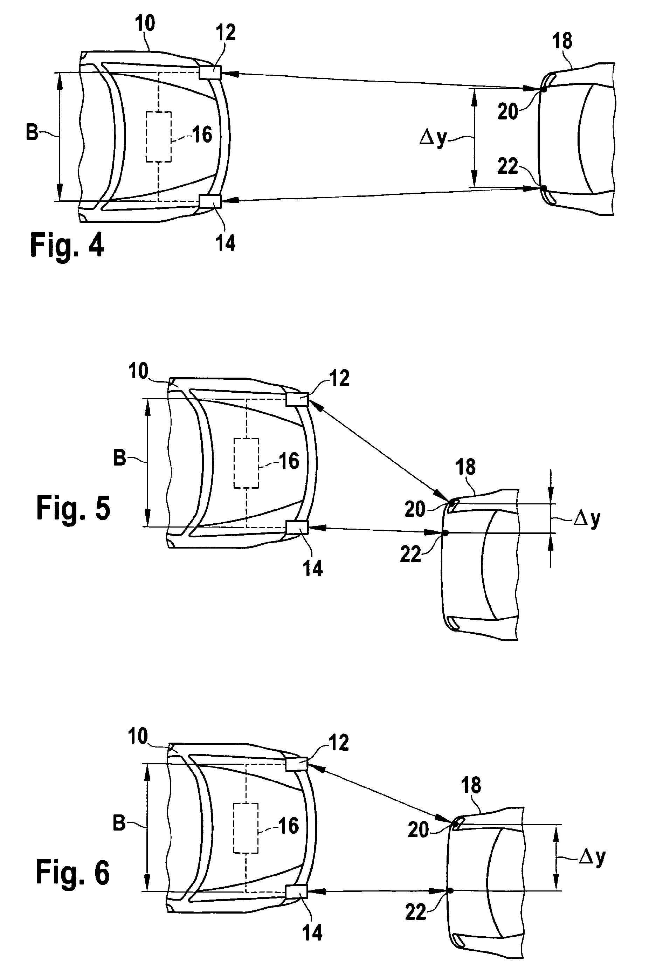

- Fig. 4: ein Flußdiagramm zur Illustration des erfindungsgemäßen Verfahrens.

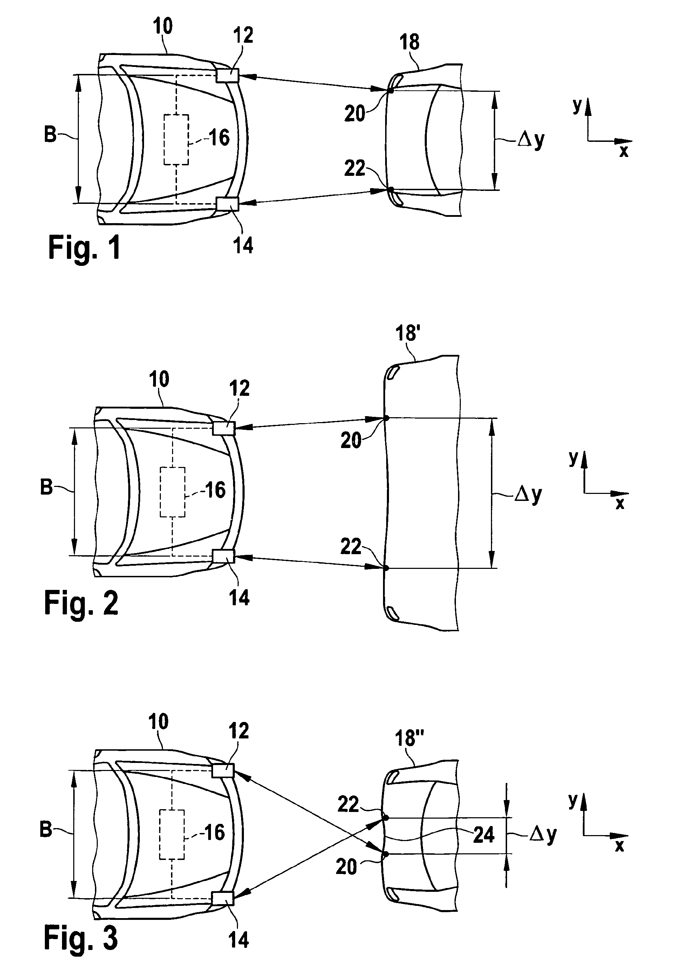

In Fig. 1 ist schematisch und im Grundriß die Frontpartie eines Kraftfahrzeugs 10 dargestellt, das mit einem Fahrerassistenzsystem ausgerüstet ist. Wesentliche Komponenten, dieses Fahrerassistenzsystems sind zwei winkelauflösende Radarsensoren 12, 14, beispielsweise 76 GHz-LRR-Sensoren, und ein elektronisches Datenverarbeitungssystem 16, das die Ortungsdaten der Radarsensoren auswertet.

Weiterhin ist in Fig. 1 der Grundriß eines Objekts 18 dargestellt, in diesem Beispiel die Rückfront eines vorausfahrenden PKW. Dieses Objekt 18 wird von beiden Radarsensoren 12 und 14 geortet. Die entsprechenden Radarstrahlen sind in Fig. 1 durch Pfeile dargestellt und verlaufen von dem jeweiligen Radarsensor 12 bzw. 14 zu einem Reflexpunkt 20 bzw. 22, werden dort reflektiert und laufen wieder zu dem Radarsensor zurück, von dem sie ausgesandt wurden. Die Lage der Reflexpunkte 20, 22 auf dem Objekt 18 ist deshalb von der - im gezeigten Beispiel leicht gewölbten - Kontur des Objekts 18 abhängig und durch die Bedingung gekennzeichnet, daß das Einfallslot der Radarstrahlen am Reflexpunkt mit der Sichtlinie zwischen diesem Reflexpunkt und dem zugehörigen Radarsensor zusammenfällt.

Ein x-y-Koordinatensystem in Fig. 1 gibt die in Fahrtrichtung, also in Richtung der Längsachse des Fahrzeugs 10 verlaufende x-Richtung und die rechtwinklig dazu verlaufende y-Richtung an. Die beiden Radarsensoren 12 und 14 sind so angeordnet, daß sie in y-Richtung einen möglichst großen Abstand zueinander aufweisen, d. h. sie befinden sich in der Nähe der linken bzw. rechten vorderen Ecke des Fahrzeugs 10. Dementsprechend liegen, insbesondere bei relativ geringem Abstand des Objekts 18, auch die Reflexpunkte 20 und 22 auf dem Objekt relativ weit in y-Richtung auseinander. Aus den von den Radarsensoren 12 und 14 gemessenen Abständen und Azimutwinkeln der zugehörigen Reflexpunkte 20, 22 lassen sich die Orte dieser Reflexpunkte im x-y-Koordinatensystem berechnen, also insbesondere auch die Lateralpositionen dieser Reflexpunkte, d. h. die Positionen auf der y-Achse (y = 0 entspricht der Mitte des Fahrzeugs 10).

Im Datenverarbeitungssystem 16 muß nun zunächst festgestellt werden, ob die georteten Reflexpunkte 20, 22 zu demselben Objekt 18 gehören oder vielleicht zu zwei verschiedenen Objekten. Ein geeignetes Kriterium für diese Entscheidung besteht darin, daß die gemessenen Abstände der Reflexpunkte nicht allzu verschieden voneinander sein sollten und außerdem die zugehörigen Relativgeschwindigkeiten (die mit Hilfe der Radarsensoren direkt gemessen werden können) im wesentlichen übereinstimmen sollten. Wenn dieses Kriterium erfüllt ist, so läßt sich schließen, daß die Breite des Objekts 18 mindestens gleich der Differenz Δy zwischen den lateralen Positionen der Reflexpunkte 20 und 22 ist.

Auf diese Weise erhält man zwar nicht die genaue Breite des Objekts 18, aber doch immerhin einen recht aussagekräftigen Schätzwert für die Mindestbreite. Wenn die so erhaltene Mindestbreite beispielsweise größer ist als die typische Breite eines Zweirads, erhält man die Information, daß das Objekt 18 jedenfalls kein Zweirad ist, so daß die wahre Breite des Objekts 18 entweder die typische Breite eines PKW oder die typische Breite eines LKW sein wird.

Eine weitere wertvolle Information erhält man aus der Tatsache, daß in Fig. 1 die Differenz Δy positiv, aber kleiner ist als die Basisbreite B, d. h. der laterale Abstand zwischen den Radarsensoren 12 und 14. Wie in Fig. 1 zu erkennen ist, läßt sich daraus nämlich schließen, daß die Rückfront des Objekts 18 konvex gewölbt ist. Zum Vergleich zeigt Fig. 2 eine konkav gewölbte Rückfront eines breiteren Objekts 18', beispielsweise eines LKW. In diesem Fall ist Δy größer als B. Der Sonderfall Δy = B entspräche einer vollkommen ebenen und exakt in y-Richtung orientierten Rückfront eines breiten Objekts, wie man sie häufig bei einem LKW antreffen wird. Aufgrund dieser Überlegungen läßt sich daher das Objekt 18 als PKW und das Objekt 18' als LKW klassifizieren, so daß man für die Breitenschätzung auf die bekannten Standardbreiten dieser Fahrzeugtypen zurückgreifen kann.

Wie Fig. 3 illustriert, sind auch negative Werte von Δy möglich. Diese deuten auf ein Objekt 18'' hin, dessen Rückfront eine konkave Struktur 24 hat, deren Breite kleiner ist als die Basisbreite B. Beispielsweise kann es sich bei der Struktur 24 um eine leichte Mulde in der Rückfront eines PKW handeln, in der üblicherweise das Nummernschild angebracht ist.

Reflexpunkte, die solche konkaven Strukturen 24 kennzeichnen, werden in aller Regel aber nicht die stärksten Radarechos liefern und werden deshalb im allgemeinen nur zusätzlich zu Haupt-Reflexpunkten auftreten, die etwa der Konfiguration nach Fig. 1 entsprechen. Auf diese Weise läßt sich das betreffende Objekt als PKW identifizieren, und wenn die negative Differenz Δy dem Betrag nach der typischen Breite eines Nummernschilds entspricht, kann außerdem davon ausgegangen werden, daß die Lage der Reflexpunkte 20 und 22 in Fig. 3 die laterale Position der Mitte des Objekts 18'' angibt, da sich das Nummernschild bei einem PKW normalerweise in der Mitte der Rückfront befindet. Da die typische Breite eines PKW bekannt ist, erhält man so insgesamt relativ exakte Information über die y-Positionen der linken und rechten Begrenzungen des georteten Objekts.

Fig. 4 zeigt wieder eine ähnliche Konfiguration wie Fig. 1, jedoch mit dem Unterschied, daß das Objekt 18 nun einen größeren Abstand zum Fahrzeug 10 hat. Aufgrund der konvexen Kontur des Objekts 18 hat dies zur Folge, daß die Reflexpunkte 20 und 22 nun näher beieinander liegen, so daß die Differenz Δy ihrer Lateralpositionen nun einen schlechteren Schätzwert für die Breite des Objekts 18 ergibt. In den meisten praktischen Fällen, die im Rahmen einer Assistenzfunktion auftreten, etwa bei der Bewertung der Kollisionsgefahr, ist die genaue Kenntnis der Breite eines Objekt sowie die Kenntnis der Lage der linken und rechten Begrenzung dieses Objekts jedoch gerade dann besonders wichtig, wenn der Abstand des Objekts bereits auf relativ kleine Werte abgenommen. Die Breitenschätzung nach dem erfindungsgemäßen Verfahren hat daher den Vorteil, daß sich ihre Qualität in dem Maße verbessert, wie die Wichtigkeit des Schätzwertes zunimmt.

Wenn außerdem im Rahmen einer Tracking-Prozedur die Bewegung des Objekts 18 relativ zum Fahrzeug 10 über einen längeren Zeitraum verfolgt wird, etwa während der allmählichen Annäherung vor einer Kollision, so läßt sich beobachten, daß die Reflexpunkte 20 und 22 auseinander wandern. Dies läßt wieder auf eine konvexe Kontur der Rückfront des Objekts und damit auf einen Pkw schließen.

Figuren 5 und 6 illustrieren den Effekt eines lateralen Versatzes des Objekts 18 relativ zu dem Fahrzeug 10. Bei einer solchen Konstellation wird einer der Reflexpunkte, in Fig. 5 der Reflexpunkt 20, von einer Ecken des Objekts 18 stammen, während der andere Reflexpunkt 22 von einem im wesentlichen ebenen zentralen Bereich der Rückfront des Objekts stammt. Wie ein Vergleich der Figuren 5 und 6 zeigt, reagiert der Reflexpunkt 20 an der Ecke wesentlich empfindlicher auf laterale Bewegungen des Objekts 18 als der zentralere Reflexpunkt 22. Bei starkem seitlichen Versatz, wie in Fig. 5, ist die Differenz Δy deutlich kleiner als die wahre Breite des Objekts. Je weiter sich das Objekt 18 jedoch in den Fahrkorridor des Fahrzeugs 10 hinein bewegt, desto besser wird die Breitenschätzung auf der Grundlage der Differenz Δy der Lateralpositionen der Reflexpunkte 20, 22 (Fig. 6).

Eine weitere deutliche Verbesserung der Breitenschätzung läßt sich dadurch erreichen, daß das Objekt 18 im Rahmen der Tracking-Prozedur über einen längeren Zeitraum verfolgt wird, wobei die Breitenschätzung ständig verbessert wird. In einer typischen Fahrsituation wird das Objekt 18, ein vorausfahrendes Fahrzeug, das von dem Fahrzeug 10 verfolgt wird, im Laufe der Zeit etwas um die Mittelachse des Fahrzeugs 10 "pendeln", so daß es von den Radarsensoren 12, 14 unter unterschiedlichen Blickwinkeln erfaßt wird. Dies läßt sich dazu nutzen, die Breitenschätzung nach und nach zu verbessern, so daß dann, wenn bei einer drohenden Kollision die Information über die Breite des Objekts benötigt wird, bereits relativ verläßliche Daten vorliegen.

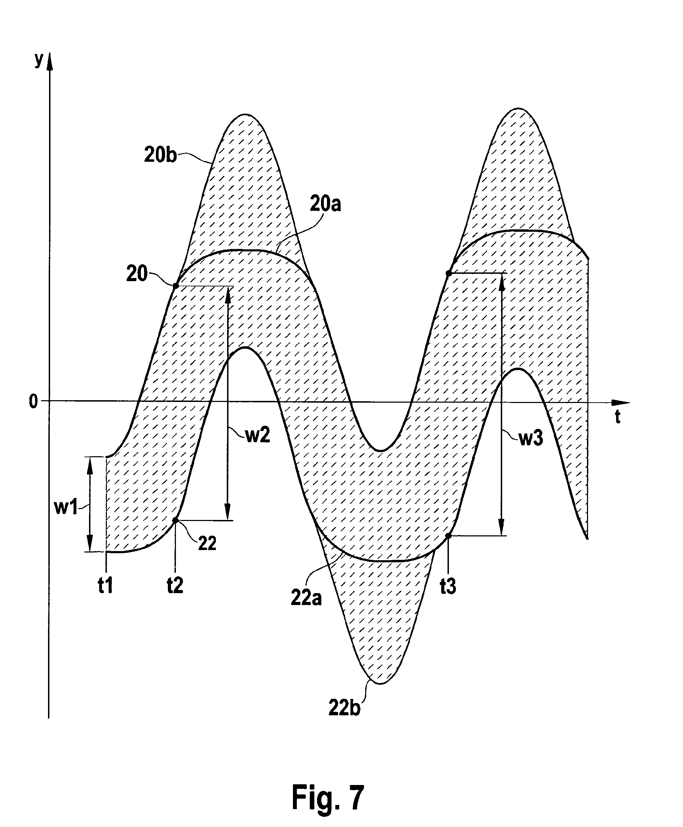

Fig. 7 zeigt ein Zeitdiagramm für eine solche Tracking-Prozedur. Die Lateralpositionen y der linken und rechten Reflexpunkte sind hier gegen die Zeit t aufgetragen und werden durch fett eingezeichnete Kurven 20a und 22a repräsentiert. Die Position y = 0 entspricht dabei der Mittelachse des Fahrzeugs 10.

Zum Zeitpunkt t1 fährt das vorausfahrende Fahrzeug, das Objekt 18, stark nach rechts versetzt, ähnlich wie in Fig. 5, und die Breitenschätzung ergibt den Wert w1.

Das Objekt 18 bewegt sich dann relativ zum Fahrzeug 10 nach links, was aufgrund des in Fig. 6 illustrierten Effekts zu einer Zunahme der Differenz Δy zwischen den Lateralpositionen der Reflexpunkte führt. Zum Zeitpunkt t2 ist die Konfiguration gemäß Fig. 1 erreicht, in der die Reflexpunkte 20a und 22a symmetrisch zur Position y = 0 liegen und die Differenz Δy der wahren Breite des Objekts 18 schon relativ nahe kommt. In dieser Situation liefert die Breitenschätzung den Wert w2.

Wenn sich nun das Objekt 18 weiter nach links bewegt, so nimmt die Differenz zwischen den Positionen der Reflexpunkte 20 und 22 wieder ab. Da jedoch bereits bekannt ist, daß die Breite des Objekts mindestens w2 beträgt, und da außerdem angenommen werden kann, daß der rechte Reflexpunkt 22 in der Nähe der rechten Grenze des Objekts liegen wird, muß die wahre linke Begrenzung des Objekts 18 mindestens um w2 links von der Position des Reflexpunktes 22 liegen, wie durch die Kurve 20b in Fig. 7 angegeben wird. Auf diese Weise erhält man eine verhältnismäßig realistische Schätzung für die laterale Ausdehnung und Position des Objekts 18, d.h., für den mindestens von dem Objekt 18 eingenommenen Bereich, der in Fig. 7 schraffiert dargestellt ist.

Im weiteren Verlauf bewegt sich das Objekt 18 wieder nach rechts, so daß die Kurve 20b wieder die Kurve 20a erreicht. Von diesem Zeitpunkt ab wird wieder der durch die Kurve 20a angegebene Wert als Schätzwert für die linke Begrenzung des Objekts angenommen, und eine Schätzung für die Position der rechten Begrenzung erhält man wieder aufgrund der Annahme, daß die Breite des Objekts mindestens w2 beträgt und das Objekt sich von dem Reflexpunkt 20 aus nach rechts erstreckt. Der Schätzwert für die rechte Begrenzung des Objekts wird dann durch die Kurve 22b angegeben.

Wenn sich das Objekt 18 dann wieder nach links bewegt, fällt auch die Kurve 22b wieder auf die Kurve 22a zurück, und von diesem Zeitpunkt an wird der Schätzwert für die rechte Begrenzung des Objekts wieder durch die Kurve 22a angegeben. Im gezeigten Beispiel hat in diesem Augenblick jedoch die Differenz Δy noch nicht wieder ihr Maximum erreicht, sondern diese Differenz wächst weiter an, etwa weil in der Zwischenzeit der Abstand zwischen dem Objekt 18 und dem Fahrzeug 10 abgenommen hat. Die Differenz Δy erreicht ein neues Maximum erst zum Zeitpunkt t3, wodurch sich eine verbesserte Breitenschätzung w3 ergibt, mit der dann die oben beschriebene Prozedur wiederholt wird.

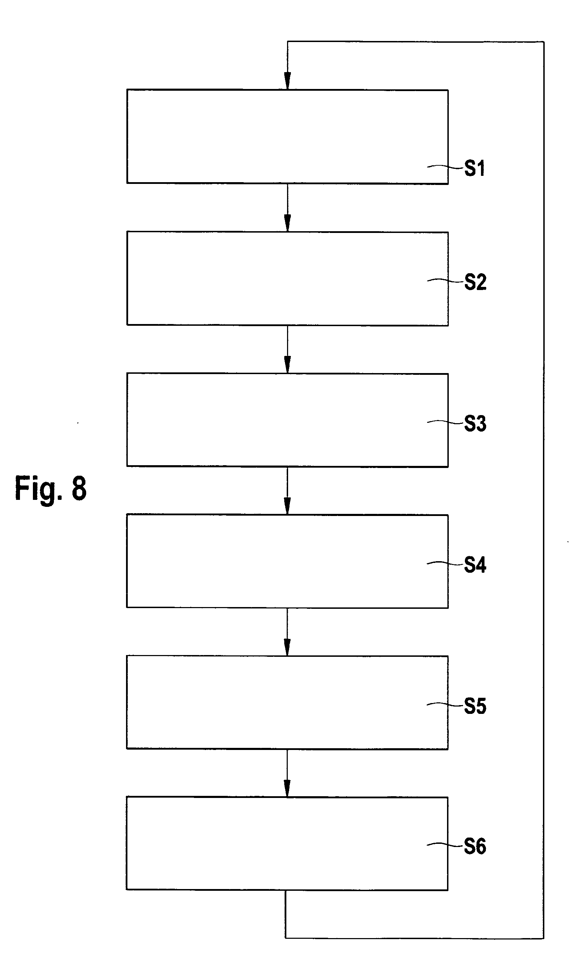

In Fig. 8 sind die wesentlichen Schritte des Verfahrens zur Schätzung der Positionen der linken und rechten Grenzen der georteten Objekte noch einmal als Flußdiagramm dargestellt.

In Schritt S1 werden anhand der Ortungsdaten beider Radarsensoren 12 und 14 Gruppen von Reflexpunkten gesucht, die im wesentlichen die gleiche Relativgeschwindigkeit und auch annähernd den gleichen Abstand haben. Dahinter steht die Annahme, daß die Gruppe der Reflexpunkte, die diese Kriterien erfüllen, ein und demselben Objekt zuzuordnen sind.

In Schritt S2 wird dann für jeden zu dieser Gruppe gehörenden Reflexpunkt anhand des vom Radarsensor gemessenen Abstands und Azimutwinkels die Lateralposition y berechnet. Wenn mehr als ein Objekt geortet wird, so wird dieser Schritt für jede Gruppe von Reflexpunkten und damit für jedes Objekt gesondert ausgeführt. Eine Gruppe kann auch mehr als zwei Reflexpunkte enthalten, da es möglich ist, daß aufgrund eines speziellen Reliefs des Objekts Radarsignale von mehreren Reflexpunkten wieder in denselben Radarsensor reflektiert werden.

Gemäß einer Weiterbildung der Erfindung ist es auch möglich, Radarsignale auszuwerten die vom linken Radarsensor 12 gesendet und nach Reflexion von rechten Radarsensor 14 empfangen werden, und umgekehrt. Das ergibt zusätzliche Reflexpunkte, die im allgemeinen zwischen den Reflexpunkten 20 und 22 liegen werden und es erlauben, die Kontur des Objekts noch genauer abzubilden.

Andererseits kann es vorkommen, daß eine Gruppe nur einen einzigen Reflexpunkt enthält. Das wird im allgemeinen dann der Fall sein, wenn das Objekt sich nicht mehr in den überlappenden Ortungsbereichen beider Radarsensoren befindet, sondern den Ortungsbereich eines Sensors verlassen hat.

In Schritt S3 wird dann für jedes Objekt ein Schätzwert w für die Mindestbreite dieses Objekts berechnet, indem das Maximum der Differenzen Δy der Lateralpositionen für alle Paare von Reflexpunkten innerhalb dieser Gruppe aufgesucht wird. Diese Suche ist nicht auf Paare beschränkt, bei denen ein Reflexpunkt vom linken Sensor und der andere vom rechten Sensor geortet wurde, sondern umfaßt, soweit vorhanden, auch Paare von Reflexpunkten, die von demselben Radarsensor geortet wurden. Auch der laterale Abstand zwischen den Reflexpunkten eines solchen Paares liefert einen Mindestwert für die Objektbreite.

In Schritt S4 wird dann das im aktuellen Meßzyklus in Schritt 3 erhaltene Ergebnis mit den entsprechenden Ergebnissen aus vorangegangenen Meßzyklen abgeglichen (Tracking), und ggf. wird der bisherige Schätzwert für die Objektbreite im Rahmen einer Filterprozedur, z. B. einer Maximum- und Tiefpassfilterung, korrigiert.

In Schritt S5 wird dann gemäß der in Fig. 7 illustrierten Prozedur die laterale Position der linken und rechten Begrenzungen des Objekts geschätzt.

Wahlweise kann sich noch ein Schritt S6 anschließen, indem anhand der Daten über die Abstände und Lateralpositionen der verschiedenen Reflexpunkte charakteristische Muster erkannt werden, beispielsweise konvexe, konkave oder ebene Rückfronten des Objekts, Signaturen von Nummernschildern und dergleichen, die eine Klassifizierung der Objekte als Zweirad, Pkw oder Lkw und damit eine Verbesserung der Breitenschätzung anhand bekannter Standardbreiten dieser Fahrzeugtypen ermöglichen.

Anschließend wird die oben beschriebene Prozedur für den nächsten Meßzyklus wiederholt. Wenn in einem Meßzyklus für ein Objekt einer der beiden Reflexpunkte 20, 22 verlorengeht, etwa weil das Objekt teilweise aus dem Ortungsbereich eines der Sensoren ausgewandert ist, so kann bei dem Tracking die vorherige Breitenschätzung für dieses Objekt beibehalten und später wieder aktualisiert werden, sobald der zweite Reflexpunkt wieder geortet wird.

## Patentansprüche

1. Verfahren zur Schätzung der Breite von Radarobjekten in einem Ortungssystem für Kraftfahrzeuge (10), das zwei winkelauflösende Radarsensoren (12, 14) aufweist, bei dem die durch unterschiedliche Radarsensoren georteten Reflexpunkte (20, 22), die aufgrund der Ähnlichkeit ihrer Abstands- und und der annähernden Identität ihrer Relativgeschwindigkeitsdaten demselben Objekt (18) zuzuordnen sind, zu einer Gruppe zusammengefaßt werden, Lateralpositionen (y) der Reflexpunkte aus dieser Gruppe berechnet werden, für verschiedene Paare dieser Reflexpunkte (20, 22) die Differenz (Dy) der Lateralpositionen berechnet wird, und zur Bestimmung eines Schätzwertes (w) für eine Mindestbreite des Objekts (18) das Maximum dieser Differenzen gesucht wird, **dadurch gekennzeichnet, daß** die zwei winkelauflösenden Radarsensoren (12, 14) in Querrichtung des Fahrzeugs jeweils möglichst nahe an den linken bzw. rechten vorderen Ecken des Fahrzeugs angeordnet sind.

2. Verfahren nach Anspruch 1, **dadurch gekennzeichnet, daß** die Objekte (18) in einer Tracking-Prozedur verfolgt werden und daß ein bisheriger Schätzwert (w1) durch einen jüngeren Schätzwert (w2) ersetzt wird, sofern dieser letztere größer ist als der bisherige Schätzwert.

3. Verfahren nach Anspruch 1 oder 2, **dadurch gekennzeichnet, daß** anhand der Lateralpositionen (y) der Reflexpunkte (20, 22) und anhand des Schätzwertes (w) für die Mindestbreite des Objekts Schätzwerte für die laterale Positionen der linken und rechten Grenzen des Objekts berechnet werden.

4. Verfahren nach einem der vorstehenden Ansprüche, **gekennzeichnet durch** einen Mustererkennungsschritt (S6), in dem die georteten Objekte anhand einer Erkennung charakteristischer Muster in den Lateralpositionen ihrer Reflexpunkte klassifiziert werden.

## Claims

1. Method for estimating the width of radar objects in a locating system for motor vehicles (10) which has two angularly-resolving radar sensors (12, 14), in which the reflection points (20, 22) located by different radar sensors, which are to be assigned to the same object (18) on the basis of the similarity of their distance data and of the approximate identity of their relative speed data, are combined to form a group, lateral positions (y) of the reflection points are calculated from this group, the difference (Dy) between the lateral positions is calculated for various pairs of these reflection points (20, 22), and the maximum of said differences is identified in order to determine an estimated value (w) for a minimum width of the object (18), **characterized in that** the two angularly-resolving radar sensors (12, 14) are arranged in the transverse direction of the vehicle to be as close as possible to the left-hand and, respectively, right-hand corners of the vehicle.

2. Method according to Claim 1, **characterized in that** the objects (18) are tracked in a tracking procedure, and **in that** a previous estimated value (w1) is replaced by a more recent estimated value (w2) provided that said latter is greater than the previous estimated value.

3. Method according to Claim 1 or 2, **characterized in that** estimated values are calculated for the lateral positions of the left-hand and right-hand boundaries of the object with the aid of the lateral positions (y) of the reflection points (20, 22) and with the aid of the estimated value (w) for the minimum width of the object.

4. Method according to one of the preceding claims, **characterized by** a pattern detection step (S6) in which the located objects are classified with the aid of recognition of characteristic patterns in the lateral positions of their reflection points.

## Revendications

1. Procédé d'estimation de la largeur d'objets radar dans un système de localisation pour véhicules automobiles (10), lequel présente deux capteurs radar (12, 14) à résolution angulaire, selon lequel les points de réflexion (20, 22) localisés par les différents capteurs radar, lesquels, du fait de la similitude de leurs données d'espacement et de l'identité approximative de leurs données de vitesse relative, sont à associer au même objet (18), sont rassemblés en un groupe, les positions latérales (y) des points de réflexion sont calculées à partir de ce groupe, la différence (Dy) entre les positions latérales est calculée pour différentes paires de ces points de réflexion (20, 22), et le maximum de ces différences est recherché en vue de déterminer une valeur estimée (w) pour une largeur minimale de l'objet (18), **caractérisé en ce que** les deux capteurs radar (12, 14) à résolution angulaire sont disposés dans le sens transversal du véhicule à chaque fois le plus près possible des coins avant gauche ou droit du véhicule.

2. Procédé selon la revendication 1, **caractérisé en ce que** les objets (18) sont suivis dans une procédure de suivi et **en ce qu'**une valeur estimée jusqu'à présent (w1) est remplacée par une valeur estimée plus récente (w2) dès que cette dernière est supérieure à la valeur estimée jusqu'à présent.

3. Procédé selon la revendication 1 ou 2, **caractérisé en ce que** des valeurs estimées pour les positions latérales des limites gauche et droite de l'objet sont calculées au moyen des positions latérales (y) des points de réflexion (20, 22) et au moyen de la valeur estimée (w) pour la largeur minimale de l'objet.

4. Procédé selon l'une des revendications précédentes, **caractérisé par** une étape de reconnaissance de modèle (S6) dans laquelle les objets localisés sont classifiés au moyen d'une reconnaissance de modèles caractéristiques dans les positions latérales de leurs points de réflexion.
